(19) Europäisches Patentamt
European Patent Office
Office européen des brevets

(11) **EP 4 576 726 A1**

(12) **EUROPEAN PATENT APPLICATION**
published in accordance with Art. 153(4) EPC

(43) Date of publication:
**25.06.2025  Bulletin 2025/26**

(21) Application number: **23867403.0**

(22) Date of filing: **15.09.2023**

(51) International Patent Classification (IPC):
***H04L 47/50*** (2022.01)

(52) Cooperative Patent Classification (CPC):
**H04L 47/50; H04L 47/56; H04L 47/62**

(86) International application number:
**PCT/CN2023/119005**

(87) International publication number:
**WO 2024/061114 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022  CN 202211136390**

(71) Applicant: **ZTE CORPORATION**
**Shenzhen, Guangdong 518057 (CN)**

(72) Inventor: **PENG, Shaofu**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **MESSAGE SCHEDULING METHOD, ELECTRONIC DEVICE, AND COMPUTER-READABLE STORAGE MEDIUM**

(57)    Provided in the present disclosure are a message scheduling method, an electronic device, and a computer-readable storage medium. The message scheduling method comprises: according to an allowed queuing delay of a message, adding the message to a countdown queue, the current queuing time range of which can cover the allowed queuing delay of the message, among a plurality of countdown queues; and sending the message according to a time sequence which is determined on the basis of queuing time ranges corresponding to the plurality of countdown queues, wherein the queuing time range of the countdown queue is [CT1, CT2-I], CT1 being a first remaining time of the countdown queue, CT2-I being a second remaining time of the countdown queue, and CT1 and CT2 satisfying the following relationship: CT2 = CT1 + AT, where AT is a queue grant time, which is the duration during which the countdown queue is allowed to send the message; the first remaining time and the second remaining time of the countdown queue incrementally decrease over time; and I is an incremental decrease step length.

add, according to an allowable queuing delay of a packet, the packet to a countdown queue, among a plurality of countdown queues, which has a current queuing time range capable of covering the allowable queuing delay of the packet — S100

send packets in a time order determined by queuing time ranges corresponding to the plurality of countdown queues — S200

FIG. 1

EP 4 576 726 A1

## Description

### CROSS REFERENCE TO RELATED APPLICATIONS

The present disclosure claims the priority to Chinese Patent Application No. 202211136390.6 filed on September 19, 2022, the contents of which are incorporated herein by reference in their entirety.

### TECHNICAL FIELD

The present disclosure relates to the field of communications, and in particular, to a packet scheduling method, an electronic device, and a computer-readable storage medium.

### BACKGROUND

In the architecture of a deterministic networking, Quality of Service (QoS) goals of deterministic forwarding in the related technology are defined as follows: minimum delay and maximum delay from source to destination, and bounded delay jitter; allowable packet loss rate; upper limit for out-of-order packet delivery. In order to achieve the QoS goals, the deterministic networking adopts the methods such as resource reservation, explicit routing, and service protection. However, the existing methods generally have the problems of complex solution and packet disorder.

### SUMMARY

In a first aspect, the present disclosure provides a packet scheduling method, including: adding, according to an allowable queuing delay of a packet, the packet to a countdown queue, among a plurality of countdown queues, which has a current queuing time range capable of covering the allowable queuing delay of the packet; and sending packets in a time order determined by queuing time ranges corresponding to the plurality of countdown queues, where the queuing time range of the countdown queue is [CT1, CT2-I], CT1 denotes a first remaining time of the countdown queue, CT2-I denotes a second remaining time of the countdown queue, CT1 and CT2 satisfy a following relationship: CT2 = CT1 + AT, AT denotes a queue authorization time which is a duration for which the countdown queue is allowed to send packets, the first remaining time and the second remaining time of the countdown queue decrease with time, and I is a decreasing step for a countdown time.

In a second aspect, the present disclosure provides an electronic device, including: at least one processor; and a storage device having stored thereon at least one computer program which, when executed by the at least one processor, causes the at least one processor to implement the packet scheduling method described in the first aspect.

In a third aspect, the present disclosure provides a computer-readable storage medium storing a computer program which, when executed by a processor, implements the packet scheduling method described in the first aspect.

### RIEF DESCRIPTION OF DRAWINGS

FIG. 1 is a flowchart illustrating a packet scheduling method according to an embodiment of the present disclosure.

FIG. 2 is another flowchart illustrating a packet scheduling method according to an embodiment of the present disclosure.

FIG. 3 is still another flowchart illustrating a packet scheduling method according to an embodiment of the present disclosure.

FIG. 4 is still another flowchart illustrating a packet scheduling method according to an embodiment of the present disclosure.

FIG. 5 is still another flowchart illustrating a packet scheduling method according to an embodiment of the present disclosure.

FIG. 6 is still another flowchart illustrating a packet scheduling method according to an embodiment of the present disclosure.

FIG. 7 is still another flowchart illustrating a packet scheduling method according to an embodiment of the present disclosure.

FIG. 8 is a schematic diagram of countdown queues of an egress port according to an embodiment of the present disclosure.

FIG. 9 is a schematic diagram of a deterministic forwarding timeline based on a local deadline mechanism according to an example of the present disclosure.

FIG. 10 is a schematic diagram of a deterministic forwarding timeline based on a local deadline mechanism in a multi-fan-in scenario according to an example of the present disclosure.

FIG. 11 is a schematic diagram of a forwarding timeline in a case where a plurality of packets with different allowable queuing delays are received within a single timing step according to an example of the present disclosure.

FIG. 12 is a schematic diagram of an electronic device according to an embodiment of the present disclosure.

FIG. 13 is a schematic diagram of a computer-readable storage medium according to an embodiment of the present disclosure.

### DETAIL DESCRIPTION OF EMBODIMENTS

It should be understood that the specific embodiments described herein are merely intended to explain the present disclosure, rather than limiting the present disclosure.

In the following description, the terms such as "module", "component" and "unit" used to indicate elements are employed merely for facilitating the description of the present disclosure, and those terms have no particular meanings in themselves. Thus, the terms "module", "component" and "unit" can be used together.

In order to achieve QoS goals, in a solution in some related technologies, a controller calculates in advance a local deadline (which is a system absolute time value) of a flow to be transmitted for each router where the flow to be transmitted passes, then the controller forms a stack of the local deadlines and carries the stack in forwarded data packets, and each router performs priority scheduling on the packets according to the local deadline for the router, thereby achieving deterministic delay requirements. However, a specific implementation technique at a forwarding plane is not discussed in the solution, and it is merely mentioned that the forwarding plane cannot adopt First-In First-Out (FIFO) queues to implement this function. However, if the packets in the queues are not ordered based on FIFO, a specific data structure needs to be adopted to store the packets having the deadlines, and the packets in the data structure may be automatically ordered in ascending order of the deadlines. It is not difficult to implement the data structure in software, but is hard in hardware of the forwarding plane. In addition, the stack of the local deadlines needs to be carried in the packets according to the solution, which also increases complexity of the implementation.

In some related technologies, a deadline-based packet scheduling solution is proposed based on a concept that merely a single deadline needs to be assigned to a packet to control packet scheduling of all nodes on a path, the single deadline is an offset time and represents an allowable planned residence time of the packet in a node. In addition, an accumulated planned residence time, an accumulated actual residence time, and an accumulated residence time deviation may be carried in the packet. The allowable residence time of the packet in the node is dynamically adjusted according to the above information, so as to realize relatively low end-to-end delay jitter. The packet may choose, according the allowable residence time thereof, to enter a queue with a corresponding remaining Time to Live (TTL). However, this solution is prone to cause packet out-of-order in some cases. For example, a plurality of packets are received at a same moment in one burst, and due to asynchronous timing steps of a sending node and a receiving node, the packets may be allocated to different queues but it cannot be ensured that a packet received later is added to a queue sent later in an order in which the packets are received, which may cause packet out-of-order.

The present disclosure provides an idea of scheduling packets based on deadlines, queues are divided based on a queuing time of each queue, and for different queues, ranges covered by upper limits of the queuing time of the queues and ranges covered by lower limits of the queuing time of the queues are different. Each received packet is added to a corresponding queue according to a planned residence time and a residence time deviation carried in the packet. Upper limits and lower limits of queuing time ranges are counted down with time to gradually decrease, so that it can be ensured that each queue performs transmission in order of queuing time.

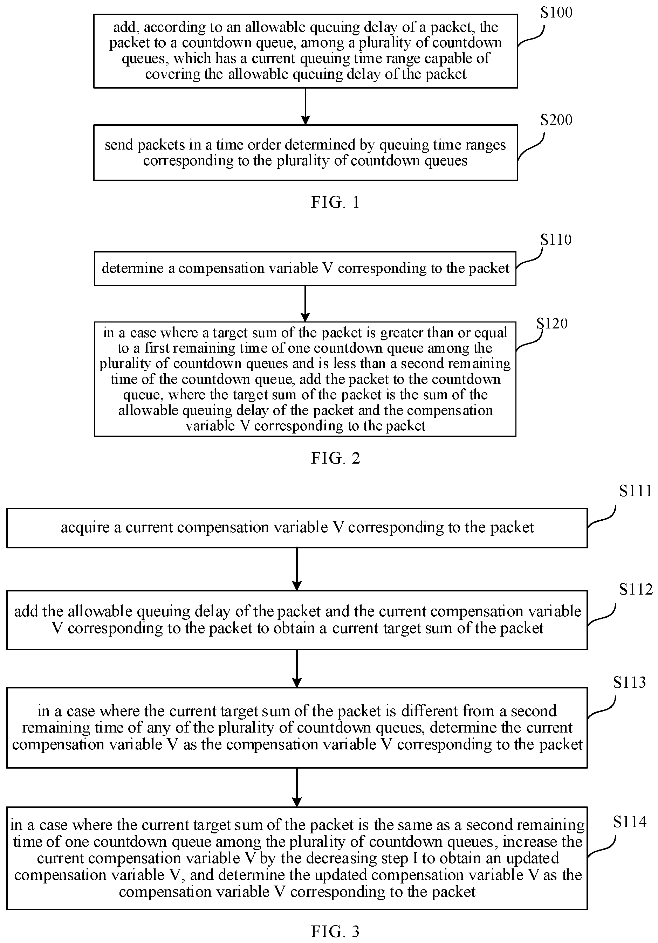

In a first aspect, an embodiment of the present disclosure provides a packet scheduling method. As shown in FIG. 1, the packet scheduling method includes the following operations S100 and S200.

At operation S100, adding, according to an allowable queuing delay of a packet, the packet to a countdown queue, among a plurality of countdown queues, which has a current queuing time range capable of covering the allowable queuing delay of the packet.

At operation S200, sending packets in a time order determined by queuing time ranges corresponding to the plurality of countdown queues.

The queuing time range of the countdown queue is [CT1, CT2-I], CT1 denotes a first remaining time of the countdown queue, CT2-I denotes a second remaining time of the countdown queue, CT1 and CT2 satisfy a following relationship: CT2 = CT1+ AT, AT denotes a queue authorization time which is a duration for which the countdown queue is allowed to send packets, the first remaining time and the second remaining time of the countdown queue decrease with time, and I is a decreasing step for a countdown time.

When a node receives a forwarded packet or generates a packet to be forwarded, the node acquires an allowable queuing delay of the packet first, and then selects a corresponding countdown queue to store the packet, and a current queuing time range of the selected countdown queue needs to be capable of covering the allowable queuing delay of the packet. The countdown queues include the following features 1) to 4).

Fearure 1) In a node in a network, among a plurality of queues maintained for a specific egress port, some queues are newly defined to have an Authorization Time (AT) and a Countdown Time (CT), and these queues based on local deadlines are called countdown queues. The authorization time of a countdown queue is a duration for which the queue can continuously send packets when the queue is scheduled.

Countdown information of each countdown queue includes two parts: a remaining time of a first countdown timer, which is denoted by CT1, and a remaining time of a second countdown timer, which is denoted by CT2-I; and a relationship between CT1 and CT2 satisfies CT2 = CT1+ AT. A range [CT1, CT2-I] between the first remaining time and the second remaining time of each countdown queue is the queuing time range. CT1 and CT2 simultaneously decrease with time, and when CT1 decreases to 0, scheduling priority of the countdown queue is the highest, packets stored in the countdown queue are immediately sent to the egress port, and a time allowed for continuous sending is the authorization time. Then, CT1 is restored to a preset maximum initial value, CT2 is reassigned to (CT1+AT), at this time, the priority of the countdown queue is not the highest, and the countdown queue proceeds to a next round of decreasing CT1 and CT2 with time. As can be seen, CT1 is a countdown time to a transmission start moment, and CT2 is a countdown time to a transmission end moment.

A cycle timer may be set on the node for performing decreasing operations on the countdown time of all the countdown queues, that is, each time the timer expires, values of CT1 and CT2 of all the countdown queues are decreased by an time interval I of the timer, that is, the time interval I of the timer serves as the decreasing steps for the countdown time of the countdown queues. The time interval I may be set to be smaller than the authorization time AT of the countdown queues and satisfy a condition that the time interval I is divisible by the authorization time AT, that is, satisfying AT = N * I, where N is an integer greater than 1. In addition, the time interval I of the timer needs to be fine enough to sense a delay requirement difference between the packets, for example, the delay requirement difference between the packets is merely a few microseconds, then the time interval of the timer may be set to 1 microsecond.

In some implementations, the queuing time ranges of the plurality of countdown queues are adjacent to each other and do not overlap.

Initially, the values of the first remaining time CT1 of all the countdown queues are staggered from each other, so that the first remaining time CT1 of merely one countdown queue decreases to 0 at any time.

Feature 2) When the first remaining time CT1 of a certain countdown queue decreases to 0, the scheduling priority of the countdown queue is the highest, the countdown queue is prohibited from caching new packets, the packets already cached in the countdown queue are immediately sent to the egress port, and the maximum duration allowed for the countdown queue to send the packets is the preset authorization time AT. All the packets cached in the countdown queue need to be sent within the authorization time in principle. If the authorization time is not used up after all the packets in the countdown queue are sent, a scheduling engine may continue to schedule another countdown queue with the next highest priority.

Further, since the authorization time of the countdown queue is divided into N equal parts by the time interval I of the timer, the countdown queue is physically divided into N equal panes, the packets in the 1st pane at the head of the countdown queue may be sent in the first time interval I (i.e., the first part of the authorization time), and the packets in the Nth pane at the tail of the countdown queue may be sent in the Nth time interval I (i.e., the Nth part of the authorization time). Therefore, the first remaining time CT1 of the countdown queue is actually a transmission countdown time of the

1st pane, and the second remaining time CT2-I is actually a transmission countdown time of the Nth pane, which is denoted by [CT1, CT2-I].

Feature 3) For the countdown queue with CT1 already decreasing to 0, CT2 of the countdown queue also decreases to 0 after the authorization time AT passes by. At this time, CT1 of the countdown queue is restored to a preset initial value, CT2 of the countdown queue is updated to (CT1+AT) at the same time, the countdown queue is allowed to cache new packets again, and proceeds to the next round of decreasing CT1 and CT2 with time.

Feature 4) The countdown queues with CT1 not decreasing to 0 are allowed to cache packets. When the node receives a forwarded packet or generates a packet to be forwarded from the specific egress port, the node acquires an allowable queuing delay Q of the packet first, and then selects a corresponding countdown queue to store the packet, and the current queuing time range [CT1, CT2-I] of the specific selected countdown queue needs to be capable of covering the allowable queuing delay Q of the packet, that is, meeting a condition: CT1 <= Q <= CT2 - I.

Reference may be made to the description in the existing draft-peng-detnet-deadline-based-forwarding-01 for how to acquire the allowable queuing delay Q of the packet in the node, the allowable queuing delay Q of the packet in the node may be obtained by adding an accumulated delay deviation of the packet to a planned residence time of the packet in the node and then subtracting a forwarding delay of the packet in the node. For example, if a queuing delay of a packet on a current node is larger than an allowable queuing delay Q of the packet, the packet may have a smaller allowable queuing delay on a downstream node; and if the queuing delay of the packet on the current node is smaller than the allowable queuing delay Q of the packet, the packet may have a larger allowable queuing delay on the downstream node.

For each packet received by the node, the allowable queuing delay of the packet may be determined with a preset calculation method according to the planned residence time and the accumulated delay deviation carried in the packet, and according to the calculated allowable queuing delay, the packet is added to a specific countdown queue having a current queuing time range [CT1, CT2-I] capable of covering the allowable queuing delay. Therefore, even in a case where a plurality of packets are received in one burst, the packets in a same countdown queue are in time order, and even if the packets are not in the same countdown queue, a packet received later is merely added to a queue with a longer countdown time, which avoids packet out-of-order.

In some special burst scenarios, for example, a node which sends packets and a node which receives the packets may not be consistent in a start moment of each timing step or a length of the timing step, resulting in different delay deviations carried in the packets when the packets are sent. For a large number of packets received by the node which receives the packets at the same moment, different allowable queuing delays are calculated according to the different delay deviations, and it may be the case that a packet received later is added to a queue with a shorter countdown time because the calculated allowable queuing delay of the packet received later is smaller due to the different delay deviations, which causes the packet out-of-order. In view of the above, a variable may be added to compensate for the problem of the different delay deviations carried in the packets in one burst in the special scenarios.

In some implementations, as shown in FIG. 2, adding, according to the allowable queuing delay of the packet, the packet to the countdown queue, among the plurality of countdown queues, which has the current queuing time range capable of covering the allowable queuing delay of the packet (i.e., operation S100) includes operations S110 and S120.

At operation S110, determining a compensation variable V corresponding to the packet.

At operation S120, in a case where a target sum of the packet is greater than or equal to a first remaining time of one countdown queue among the plurality of countdown queues and is less than a second remaining time of the countdown queue, adding the packet to the countdown queue, where the target sum of the packet is a sum of the allowable queuing delay of the packet and the compensation variable V corresponding to the packet.

The compensation variable V is added based on the allowable queuing delay Q, matching with a value of the target sum (Q+V) is performed on a current queuing time range [CT1, CT2-I] of each countdown queue, and in a case where the value of the target sum (Q+V) is matched with the current queuing time range [CT1, CT2-I] of a certain countdown queue, the packet is added to the countdown queue.

In some implementations, adding, according to the allowable queuing delay of the packet, the packet to the countdown queue, among the plurality of countdown queues, which has the current queuing time range capable of covering the allowable queuing delay of the packet (i.e., operation S100) further includes: in a case where the target sum of the packet is the same as a second remaining time of one countdown queue among the plurality of countdown queues, adding the packet to a countdown queue after the countdown queue with the second remaining time the same as the allowable queuing delay of the packet.

In a case where the value of the target sum Q+V is equal to the second remaining time CT2-I of a certain countdown queue, instead of being added to the certain countdown queue, the packet is added to a countdown queue with a countdown time longer than a time length corresponding to the second remaining time CT2-I of the countdown queue, i.e., a countdown queue after the certain countdown queue.

Further, as shown in FIG. 3, determining the compensation variable V corresponding to the packet (i.e., operation S110) includes operations S111 to S114.

At operation S111, acquiring a current compensation variable V corresponding to the packet.

At operation S112, adding the allowable queuing delay of the packet and the current compensation variable V corresponding to the packet to obtain a current target sum of the packet.

At operation S113, in a case where the current target sum of the packet is different from a second remaining time of any of the plurality of countdown queues, determining the current compensation variable V as the compensation variable V corresponding to the packet.

At operation S114, in a case where the current target sum of the packet is the same as a second remaining time of one countdown queue among the plurality of countdown queues, increasing the current compensation variable V by the decreasing step I to obtain an updated compensation variable V, and determining the updated compensation variable V as the compensation variable V corresponding to the packet.

In order to ensure that a target sum Q+V of a packet received later is not less than a target sum Q+V of a packet received earlier in a burst, the compensation variable V may be set to increase. For example, each time the target sum Q+V is equal to the second remaining time CT2-I of a certain countdown queue, the compensation variable V is increased by one decreasing step I for the countdown time, i.e., V = V + I, matching with the target sum Q+V is then performed on the current queuing time range [CT1, CT2-I] of each countdown queue, and the packet is added to the countdown queue having the current queuing time range [CT1, CT2-I] capable of covering the target sum Q+V.

In some special timing scenarios described above, for example, in a scenario where a large number of packets are sent in one burst, the packets may be sent in different steps from upstream nodes, a delay deviation carried in a packet sent later may be smaller than a delay deviation carried in a packet sent earlier, the two packets are received by a current node in a same step because steps of different nodes may not be synchronized, an allowable queuing delay Q of the packet received later may be smaller than an allowable queuing delay Q of the packet received earlier by one decreasing step I, and the packet received later may enter a countdown queue with a shorter countdown time. In view of the above, according to the packet scheduling method provided in the present disclosure, the compensation variable V is set for similar problems caused by special time sequences, and the target sum Q+V is adopted for matching with a coverage range of each countdown queue to determine a countdown queue which each packet can enter. The principles will be illustrated by examples below.

As described above, each countdown queue satisfies CT2 = CT1 + AT, and if a queuing time range of a previous countdown queue is [CT1, CT2-I], a queuing time range of an adjacent next countdown queue is [CT2, (CT2+AT)-I]. Initially, no compensation is needed, and an initial value of the compensation variable V may be set to 0, i.e., Q + V = Q . It is assumed that an allowable queuing delay Q of a previous packet of two packets is CT2, a delay deviation of a next packet of the two packets is smaller due to steps of upstream nodes, a calculated allowable queuing delay Q of the next packet is equal to the second remaining time CT2-I, and thus hits the range covered by the previous countdown queue. In order to avoid an out-of-order problem that the next packet enters the previous countdown queue, the target sum Q+V is adjusted by increasing the compensation variable V. When the target sum Q+V is exactly equal to an upper limit of a certain countdown queue, i.e., the second remaining time CT2-I, the compensation variable V is increased by the decreasing step I before compensation is performed. At this time, since the compensation variable V is increased by the decreasing step I, the target sum Q+V is not equal to the second remaining time CT2-I but is equal to CT2, so that the next packet also enters the next countdown queue, and a time order of the two packets is not changed when the two packets enter the same countdown queue, which avoids the packet out-of-order.

On the current node, each time the compensation variable V is increased, subsequent packets in a same burst are subjected to compensation according to a value of the increased compensation variable V, and matching with the target sum Q+V is performed on the coverage range of each countdown queue to determine the countdown queues which the packets can enter. If the case where the target sum Q+V is exactly equal to a second remaining time CT2-I of a certain countdown queue occurs again, the compensation variable V is increased by the decreasing step I again, and subsequent packets are also subjected to compensation according to a value of the increased compensation variable V, and so on until all the packets in the burst are sent. Then, the compensation variable V is reset.

It should be noted that, in specific implementations, the countdown information of the countdown queue may be explicitly set attributes of the countdown queue, and the attributes may be displayed to the public when implemented in hardware; and the countdown information of the countdown queue may be implicitly deduced from other information (such as a serial number, a name, and so on) of the countdown queue in combination with a necessary number of ticks (such as the number of time intervals of the timer during a single authorization time), and the attributes do not have to be displayed to the public when implemented in hardware. Whether the attributes are explicit or implicit, there is no essential difference for the processing based on the attributes as described in the present disclosure.

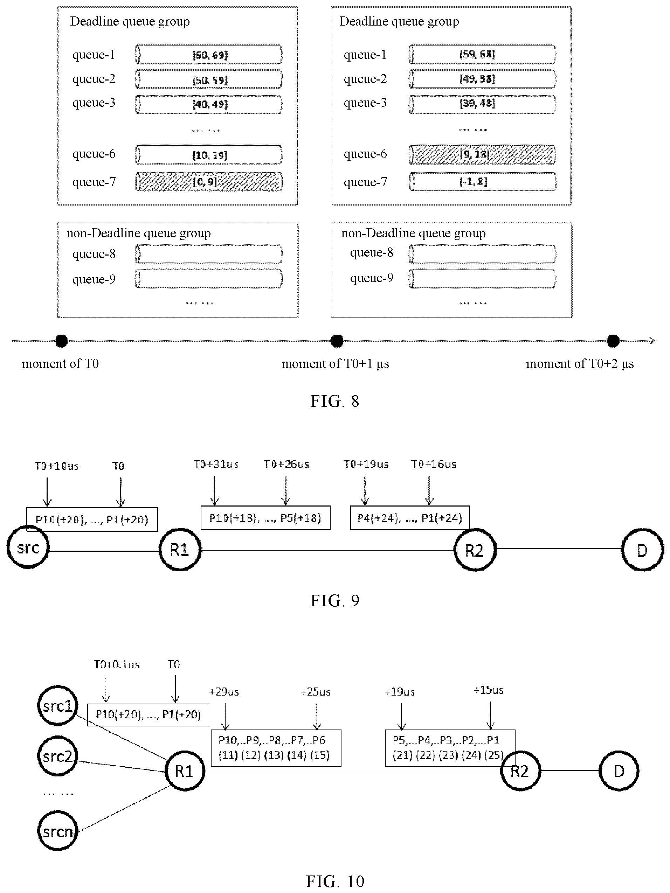

For example, FIG. 8 illustrates an example of countdown queues. Queues queue-1 to queue-7 are countdown queues, and other queues are conventional non-countdown queues. An authorization time AT of each countdown queue is 10 μs, each countdown queue has countdown information, and a timer interval (I) of 1 μs is adopted for decreasing in values of countdown time. A preset maximum countdown initial value (MAX_CT) is 60 μs. At an initial moment (a moment of T0), the values of the countdown time of all the countdown queues are staggered from each other, for example, the countdown information (i.e., a queuing time range) of the countdown queue queue-1 is [CT1, CT2-I]=[60, 69] μs, the countdown information of the countdown queue queue-2 is [CT1, CT2-I]=[50, 59] μs, the countdown information of the countdown queue queue-3 is [CT1, CT2-I]=[40, 49] μs, and so on. At this time, merely a first remaining time CT1 of the countdown queue queue-7 is 0, the countdown queue queue-7 has the highest scheduling priority and stops receiving new packets, and packets already stored in the countdown queue queue-7 are immediately sent.

At a moment of T0+1 μs, the countdown information of the countdown queue queue-1 is changed to [CT1, CT2-I]=[59, 68] μs, the countdown information of the countdown queue queue-2 is changed to [CT1, CT2-I]=[49, 58] μs, the countdown information of the countdown queue queue-3 is changed to [CT1, CT2-I]=[39, 48] μs, and so on. At this time, the first remaining time CT1 of the countdown queue queue-7 is -1 (alternatively, in one implementation, when a first remaining time CT1 of a countdown queue is changed to 0, the first remaining time CT1 is frozen to 0 for a following authorization time), and the countdown queue queue-7 still has the highest scheduling priority.

At a moment of T0+10 μs, that is, after the authorization time AT passes by, the countdown information of the countdown queue queue-1 is changed to [CT1, CT2-I]=[50, 59] μs, the countdown information of the countdown queue queue-2 is changed to [CT1, CT2-I] =[40, 49] μs, the countdown information of the countdown queue queue-3 is changed to [CT1, CT2-I]=[30, 39] μs, and so on. At this time, the first remaining time CT1 of the countdown queue queue-7 is restored to the maximum countdown initial value (MAX_CT), i.e., 60 μs, and the countdown queue queue-7 does not have the highest scheduling priority, and is allowed to receive new packets. At this time, a first remaining time CT1 of the countdown queue queue-6 is 0, the countdown queue queue-6 has the highest scheduling priority and stops receiving new packets, and packets already stored in the countdown queue queue-6 are immediately sent.

Assuming that at the moment of T0, a node receives a packet P1 which needs to be forwarded based on a local deadline mechanism and has an allowable queuing delay Q of 15 μs, the packet may enter the countdown queue queue-6 because the condition of CT1 <= Q <= CT2 - I is satisfied, that is, 10<=15<=19; similarly, assuming that at the moment of T0, the node receives a packet P2 which needs to be forwarded based on the local deadline mechanism and has an allowable queuing delay Q of 49 μs, the packet may enter the countdown queue-3 because the condition of CT1 <= Q <= CT2 - I is satisfied, that is, 40<=49<=49. It should be noted that the present example is merely for preliminarily illustrating a packet queuing action of the present disclosure. In fact, as described above, inserting the packets into the countdown queues according to the condition "CT1 <= Q <= CT2 - I" has the problem of packet out-of-order in some cases, and further optimization measures are provided as follows.

On the node, for each deterministic flow, a separate compensation variable V may be maintained at a granularity of a data flow. The setting of the compensation variable V satisfies the following rules a) and b), so as to implement the further optimization measures for avoiding the packet out-of-order.

Rule a) The initial value of the compensation variable V is 0, and each time the node receives packets from one new burst of a specific deterministic flow, the compensation variable V corresponding to the deterministic flow is reset to 0.

It should be noted that there are various ways to distinguish between different deterministic flows in a network in the related technology, for example, different flow identification information is carried in a related field of each packet header. In addition, a source which generates the deterministic flow generally sends packets regularly, for example, the source generates one burst every specific length of time interval, and one burst includes some ordered packets. Although it is generally supported in the related technology that the packets carry packet sequence numbers, it is further assumed in the present disclosure that the packets include burst sequence numbers, that is, the node may determine whether the packets belong to a new burst according to the burst sequence numbers in the packets.

Rule b) The node processes each packet included in a current burst in turn, and inserts the packets into suitable countdown queues. Specifically, please see the following pseudocode:

> an allowable queuing delay Q of the packet and a current compensation variable V corresponding to the packet are acquired;
> if a target sum Q+V is capable of being covered by a certain countdown queue X, that is, CT1 of X<=Q+V<CT2-I of X, the packet is inserted into the countdown queue X;
> if the target sum Q+V is not capable of being covered by any countdown queue X and the target sum Q+V is exactly equal to a second remaining time CT2-I of a certain countdown queue X, V=V+I is executed first to obtain a new target sum Q+V, and the packet is then inserted into a suitable countdown queue Y according to the new target sum Q+V (the countdown queue Y is a countdown queue adjacent to the countdown queue X, and a value of a first remaining time CT1 of the countdown queue Y is larger), that is, it is satisfied that the first remaining time CT1 of the

> countdown queue Y<=Q+V<a second remaining time CT2-I of the countdown queue Y; and
> a plurality of packets in one burst may cause the execution of V=V+I, but the compensation variable V is not accumulated indefinitely because in the present of a next burst of packets, the compensation variable V is cleared to zero before the above packet queuing operation is executed again.

In some implementations, the packet scheduling method further includes: calculating the allowable queuing delay of the packet according to a planned residence time and a delay deviation carried in the packet.

The most basic algorithm is to directly add the planned residence time and the delay deviation, and then subtract a forwarding delay of the packet in the node to obtain the allowable queuing delay Q. The node receives the packet and adds the packet to the corresponding countdown queue, the packet queues up and is then sent, and an actual queuing time of the packet on the node may not be exactly equal to the allowable queuing delay, so that a delay deviation is caused when the packet is forwarded by each node, and an accumulated delay deviation may be carried to a next node. For example, the planned residence time is 20 μs, no delay deviation exists on a first node, the allowable queuing delay Q is 20 μs without considering the forwarding delay of the packet in the node; and assuming that the actual queuing time is 16 μs, the actual queuing time is smaller than the allowable queuing delay, so the packet carrying a delay deviation of 20-16=4 (μs) may be sent to a next node, which can be understood as saving 4 μs at this node. Thus, at the next node, the allowable queuing delay Q is equal to the sum of the planned residence time of 20 μs and the delay deviation of 4 μs, i.e., 24 μs; and assuming that the actual queuing time at this node is 30 μs, the actual queuing time is greater than the allowable queuing delay of 24 μs, so the packet carrying a delay deviation of 24-30=-6 (μs) may be sent to a node following the next node, which can be understood as taking 6 μs longer at this node. Thus, at the node following the next node, the allowable queuing delay is equal to the sum of the planned residence time of 20 μs and the delay deviation of (-6) μs, i.e., 14 μs, and so on.

Certainly, there are many factors affecting the delay in the network, merely one of the most basic algorithms is listed here, and the calculation method may be determined according to a specific influencing factor, so as to obtain a more accurate allowable queuing delay.

As described above, the compensation variable V is set according to the embodiments of the present disclosure for avoiding the problem of packet out-of-order that may exist in some special timing sequences.

In some implementations, a creation granularity of the compensation variable V includes at least one of the following granularities: taking a data flow as the granularity, with a compensation variable V created for a data flow to which the packet belongs and taken as the compensation variable V corresponding to the packet; taking an ingress port as the granularity, with a compensation variable V created for an ingress port which receives the packet and taken as the compensation variable V corresponding to the packet; taking a combination of the ingress port and the data flow as the granularity, with a compensation variable V created for the data flow to which the packet belongs under the ingress port which receives the packet and taken as the compensation variable V corresponding to the packet; taking a planned residence time as the granularity, with a compensation variable V created for a data flow having a planned residence time the same as that of the packet and taken as the compensation variable V corresponding to the packet; or taking a combination of the ingress port, the planned residence time, and the data flow as the granularity, with a compensation variable V created for the data flow having the planned residence time the same as that of the packet under the ingress port which receives the packet and taken as the compensation variable V corresponding to the packet. It should be noted that the creation granularity of the compensation variable V may be based on a single data flow or an ingress port of the node, and may be also based on factors such as the same planned residence time, and may be even based on a combination of several factors, which will not be listed here.

In some implementations, the packet scheduling method further includes: when the compensation variable V corresponding to the packet does not exist, creating the compensation variable V corresponding to the packet, and setting an initial value for the compensation variable V.

For example, in a case where the data flow is taken as the granularity, a corresponding compensation variable V is respectively created for each data flow received by the node. When the packet is received, the compensation variable V of the data flow to which the packet belongs is directly used for compensating the allowable queuing delay Q. The initial value of the compensation variable V may be generally set to 0, or the initial value of the compensation variable V may be set to other values as required. In a case where the other factors are taken as the creation granularity of the compensation variable V, an operation similar to the above operation is performed.

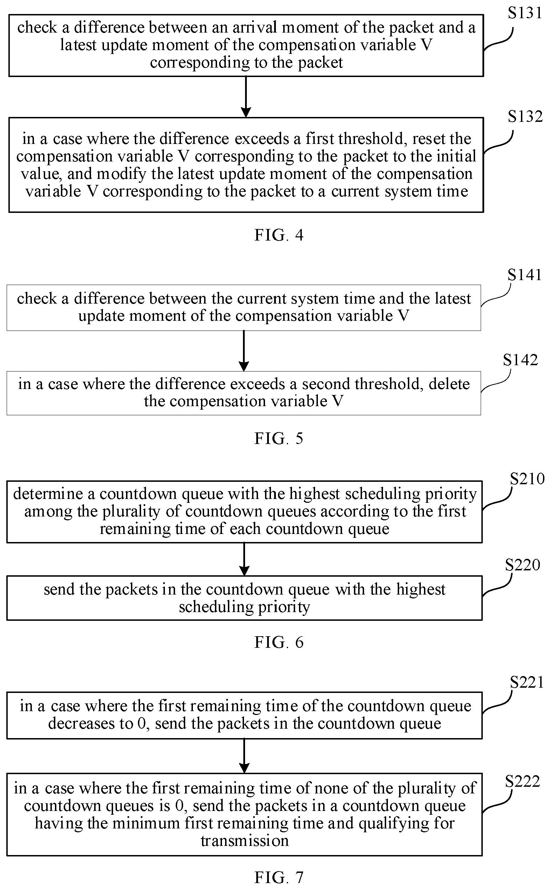

In some implementations, as shown in FIG. 4, the packet scheduling method further includes operations S131 and S132.

At operation S131, checking a difference between an arrival moment of the packet and a latest update moment of the compensation variable V corresponding to the packet.

At operation S132, in a case where the difference exceeds a first threshold, resetting the compensation variable V corresponding to the packet to the initial value, and modifying the latest update moment of the compensation variable V corresponding to the packet to a current system time.

When the compensation variable is initially created, a current system time may be taken as the latest update moment of the compensation variable V. Then, each time the compensation variable V is changed, a current system time when the change occurs is taken as the latest update moment of the compensation variable V.

A recycling mechanism is also needed for the compensation variable V. If the compensation variable V is not recycled, the number of compensation variables V may become larger and larger, which causes unnecessary burden to the system, and may lead to a result that the value of the compensation variable V after being increased by I for multiple times becomes too large to be matched with the countdown queue.

In some implementations, as shown in FIG. 5, the packet scheduling method further includes: regularly performing a recycling process of the compensation variable V.

The recycling process includes operations S141 and S142.

At operation S141, checking a difference between the current system time and the latest update moment of the compensation variable V.

At operation S142, in a case where the difference exceeds a second threshold, deleting the compensation variable V.

It should be noted that the above is merely one example of the recycling process provided in the embodiments of the present disclosure, other recycling methods may be adopted, for example, a recycling period is set with a timer for the compensation variable V, or a quantity interval is set for the received packets, or a quantity interval is set for the value of the compensation variable V, and the other recycling methods will not be listed here one by one. Any regularly performed recycling process for the compensation variable V falls within the scope of the present disclosure.

In some implementations, as shown in FIG. 6, the first remaining time of each countdown queue is inversely proportional to the scheduling priority of the countdown queue, and sending the packets in the time order determined by the queuing time ranges corresponding to the plurality of countdown queues (i.e., operation S200) includes operations S210 and S220.

At operation S210, determining a countdown queue with the highest scheduling priority among the plurality of countdown queues according to the first remaining time of each countdown queue.

At operation S220, sending the packets in the countdown queue with the highest scheduling priority.

Further, as shown in FIG. 7, sending the packets in the countdown queue with the highest scheduling priority (i.e., operation S220) includes operations S221 and S222.

At operation S221, in a case where the first remaining time of the countdown queue decreases to 0, sending the packets in the countdown queue.

At operation S222, in a case where the first remaining time of none of the plurality of countdown queues is 0, sending the packets in a countdown queue having the minimum first remaining time and qualifying for transmission.

Each countdown queue in the embodiments of the present disclosure may be cyclically used after sending the packets therein.

In some implementations, the packet scheduling method further includes: in a case where the first remaining time of the countdown queue decreases to 0 and a time slice having a time length equal to the queue authorization time AT passes by, resetting the first remaining time and the second remaining time of the countdown queue, with the first remaining time of the countdown queue reset to a preset initial maximum value, and the second remaining time of the countdown queue reset to a value obtained by subtracting the decreasing step I from the sum of the preset initial maximum value and the queue authorization time AT.

Similarly, the old countdown queue which completes the sending may be deleted, and a new countdown queue with a first remaining time being the preset initial maximum value may be created, which is substantially the same as the above implementation.

In the packet scheduling method provided in the present disclosure, the queues are divided according to the time ranges, the allowable queuing delay of each packet is independently calculated, and the packet is added to the queue having the corresponding time range. In this way, for adjacent packets in a same flow, even if the packet received later has a smaller allowable queuing delay, the adjacent packets can be added to a same queue or the packet received later can be added to a next queue, and the packet received later is not added to a queue with a shorter remaining time, which avoids the packet out-of-order.

Specific application of the packet scheduling method described in the first aspect of the present disclosure to an actual service forwarding process is illustrated below by three examples.

Example 1

As shown in FIG. 9, one burst sent by a source node (src) includes 10 ordered packets, and the packets are forwarded based on the local deadline mechanism. It is desired that the packet out-of-order caused by a delay adjustment mechanism of local deadlines is not incurred during the forwarding of the packets in the network. There are the following assumptions a) to d).

Assumption a) A planned residence time of each packet in each node is 20 $\mu$s. For facilitating the illustration of the present example, other types of delays in the node are not considered in the present example, that is, a residence time is merely contributed by a queuing delay. In fact, a similar implementation is feasible in application scenarios where the other types of delays are considered.

Assumption b) A transmission time for each packet to be sent to an egress port is 1 $\mu$s. The transmission time is related to a bandwidth of the egress port, and for packets with a same size, the larger the bandwidth of the egress port is, the less the transmission time is.

Assumption c) A propagation delay of the packet on a link is not considered. In fact, a similar implementation is feasible in application scenarios where the propagation delay is considered.

Assumption d) An authorization time of countdown queues maintained on each node is 10 $\mu$s, and a timer interval of 1 $\mu$s is adopted for decrease in countdown information of each queue.

Next, a specific example is described below to illustrate a queuing operation of the packets on each node and explain how to avoid the packet out-of-order with the packet scheduling method of the present disclosure.

Node R1: Assuming that at a moment of T0, countdown queues maintained on the node R1 has the following countdown information:

    Queue-A: [CT1, CT2-I]=[15, 24]
    Queue-B: [CT1, CT2-I]=[25, 34]
    Queue-C: [CT1, CT2-I]=[35, 44]

Each countdown time above may be gradually decreased as the time passes by.

Initially, a compensation variable V is 0.

At the moment of T0, the node R1 receives a first packet P1, and an allowable queuing delay of the packet is 20 $\mu$s (see the number in parentheses, and allowable queuing delays of other packets are also shown by the numbers in parentheses), so that the packet enters the countdown queue Queue-A because the countdown time [15, 24] of the countdown queue can cover 20 $\mu$s, that is, 15<=20<24.

At a moment of T0+1 $\mu$s, the node R1 receives a second packet P2, and an allowable queuing delay of the packet is 20 $\mu$s, so that the packet enters the countdown queue Queue-A because the countdown time [14, 23] of the countdown queue can cover 20 $\mu$s, that is, 14<=20<23.

At a moment of T0+2 $\mu$s, the node R1 receives a third packet P3, and an allowable queuing delay of the packet is 20 $\mu$s, so that the packet enters the countdown queue Queue-A because the countdown time [13, 22] of the countdown queue can cover 20 $\mu$s, that is, 13<=20<22.

At a moment of T0+3 $\mu$s, the node R1 receives a fourth packet P4, and an allowable queuing delay of the packet is 20 $\mu$s, so that the packet enters the countdown queue Queue-A because the countdown time [12, 21] of the countdown queue can cover 20 $\mu$s, that is, 12<=20<21.

At a moment of T0+4 $\mu$s, the node R1 receives a fifth packet P5, and an allowable queuing delay of the packet is 20 μs, so that the packet enters the countdown queue Queue-B for the following reason: the allowable queuing delay of the packet is exactly equal to CT2-I of the countdown queue Queue-A, i.e., 20, so that the compensation variable V is increased to 1, and the packet enters the adjacent countdown queue Queue-B with the first remaining time CT1 having a larger value (at this time, the countdown time [CT1, CT2-I] of the countdown queue Queue-B is [21, 30]), that is, 21<=20+1<30.

At a moment of T0+5 μs, the node R1 receives a sixth packet P6, and an allowable queuing delay of the packet is 20 μs, so that the packet enters the countdown queue Queue-B because the countdown time [20, 29] of the countdown queue can cover 20 μs, that is, 20<=20+1<29.

At a moment of T0+6 μs, the node R1 receives a seventh packet P7, and an allowable queuing delay of the packet is 20 μs, so that the packet enters the countdown queue Queue-B because the countdown time [19, 28] of the countdown queue can cover 20 μs, that is, 19<=20+1<28.

At a moment of T0+7 μs, the node R1 receives an eighth packet P8, and an allowable queuing delay of the packet is 20 μs, so that the packet enters the countdown queue Queue-B because the countdown time [18, 27] of the countdown queue can cover 20 μs, that is, 18<=20+1<27.

At a moment of T0+8 μs, the node R1 receives a ninth packet P9, and an allowable queuing delay of the packet is 20 μs, so that the packet enters the countdown queue Queue-B because the countdown time [17, 26] of the countdown queue can cover 20 μs, that is, 17<=20+1<26.

At a moment of T0+9 μs, the node R1 receives a tenth packet P10, and an allowable queuing delay of the packet is 20 μs, so that the packet enters the countdown queue Queue-B because the countdown time [16, 25] of the countdown queue can cover 20 μs, that is, 16<=20+1<25.

Then, the node R1 may send the packet P1 at T0+15 μs. Considering that the transmission time of the packet P1 is 1 μs, an actual residence time of the packet P1 at the node R1 (compared with the receiving moment of T0 of the packet P1) is 16 μs, and a delay deviation of the packet P1 is 4 μs according to comparison of the actual residence time with the planned residence time of 20 μs.

The node R1 may send the packet P2 at T0+16 μs. Considering that the transmission time of the packet P2 is 1 μs, an actual residence time of the packet P2 at the node R1 (compared with the receiving moment of T0+1 μs of the packet P2) is 16 μs, and a delay deviation of the packet P2 is 4 μs according to comparison of the actual residence time with the planned residence time of 20 μs.

The node R1 may send the packet P3 at T0+17 μs. Considering that the transmission time of the packet P3 is 1 μs, an actual residence time of the packet P3 at the node R1 (compared with the receiving moment of T0+2 μs of the packet P3) is 16 μs, and a delay deviation of the packet P3 is 4 μs according to comparison of the actual residence time with the planned residence time of 20 μs.

The node R1 may send the packet P4 at T0+18 μs. Considering that the transmission time of the packet P4 is 1 μs, an actual residence time of the packet P4 at the node R1 (compared with the receiving moment of T0+3 μs of the packet P4) is 16 μs, and a delay deviation of the packet P4 is 4 μs according to comparison of the actual residence time with the planned residence time of 20 μs.

The node R1 may send the packet P5 at T0+25 μs. Considering that the transmission time of the packet P5 is 1 μs, an actual residence time of the packet P5 at the node R1 (compared with the receiving moment of T0+4 μs of the packet P5) is 22 μs, and a delay deviation of the packet P5 is -2 μs according to comparison of the actual residence time with the planned residence time of 20 μs.

The node R1 may send the packet P6 at T0+26 μs. Considering that the transmission time of the packet P6 is 1 μs, an actual residence time of the packet P6 at the node R1 (compared with the receiving moment of T0+5 μs of the packet P6) is 22 μs, and a delay deviation of the packet P6 is -2 μs according to comparison of the actual residence time with the planned residence time of 20 μs.

The node R1 may send the packet P7 at T0+27 μs. Considering that the transmission time of the packet P7 is 1 μs, an actual residence time of the packet P7 at the node R1 (compared with the receiving moment of T0+6 μs of the packet P7) is 22 μs, and a delay deviation of the packet P7 is -2 μs according to comparison of the actual residence time with the planned residence time of 20 μs.

The node R1 may send the packet P8 at T0+28 μs. Considering that the transmission time of the packet P8 is 1 μs, an actual residence time of the packet P8 at the node R1 (compared with the receiving moment of T0+7 μs of the packet P8) is 22 μs, and a delay deviation of the packet P8 is -2 μs according to comparison of the actual residence time with the planned residence time of 20 μs.

The node R1 may send the packet P9 at T0+29 μs. Considering that the transmission time of the packet P9 is 1 μs, an actual residence time of the packet P9 at the node R1 (compared with the receiving moment of T0+8 μs of the packet P9) is 22 μs, and a delay deviation of the packet P9 is -2 μs according to comparison of the actual residence time with the planned residence time of 20 μs.

The node R1 may send the packet P10 at T0+30 μs. Considering that the transmission time of the packet P10 is 1 μs, an actual residence time of the packet P10 at the node R1 (compared with the receiving moment of T0+9 μs of the packet P10) is 22 μs, and a delay deviation of the packet P10 is -2 μs according to comparison of the actual residence time with the planned residence time of 20 μs.

As can be seen, an order of transmission of the packets is guaranteed.

Node R2: Assuming that at a moment of T0+16 μs, countdown queues maintained on a node R2 has the following countdown information:

    Queue-X: [CT1, CT2-I]=[24, 33]
    Queue-Y: [CT1, CT2-I]=[34, 43]
    Queue-Z: [CT1, CT2-I]=[44, 53]

Each countdown time above may be gradually decreased as the time passes by.

Initially, a compensation variable V is 0.

At the moment of T0+16 $\mu$s, the node R2 receives the first packet P1, and an allowable queuing delay of the packet is 24 $\mu$s (the planned residence time+the delay deviation=20+4), so that the packet enters the countdown queue Queue-X because the countdown time [24, 33] of the countdown queue can cover 24 $\mu$s, that is, 24<=24<33.

At a moment of T0+17 $\mu$s, the node R2 receives the second packet P2, and an allowable queuing delay of the packet is 24 $\mu$s (the planned residence time+the delay deviation=20+4), so that the packet enters the countdown queue Queue-X because the countdown time [23, 32] of the countdown queue can cover 24 $\mu$s, that is, 23<=24<32.

At a moment of T0+18 $\mu$s, the node R2 receives the third packet P3, and an allowable queuing delay of the packet is 24 $\mu$s (the planned residence time+the delay deviation=20+4), so that the packet enters the countdown queue Queue-X because the countdown time [22, 31] of the countdown queue can cover 24 $\mu$s, that is, 22<=24<31.

At a moment of T0+19 $\mu$s, the node R2 receives the fourth packet P4, and an allowable queuing delay of the packet is 24 $\mu$s (the planned residence time+the delay deviation=20+4), so that the packet enters the countdown queue Queue-X because the countdown time [21, 30] of the countdown queue can cover 24 $\mu$s, that is, 21<=24<30.

At a moment of T0+26 $\mu$s, the node R2 receives the fifth packet P5, and an allowable queuing delay of the packet is 18 $\mu$s (the planned residence time+the delay deviation=20-2), so that the packet enters the countdown queue Queue-X because the countdown time [14, 23] of the countdown queue can cover 18 $\mu$s, that is, 14<=18<23.

At a moment of T0+27 $\mu$s, the node R2 receives the sixth packet P6, and an allowable queuing delay of the packet is 18 $\mu$s (the planned residence time+the delay deviation=20-2), so that the packet enters the countdown queue Queue-X because the countdown time [13, 22] of the countdown queue can cover 18 $\mu$s, that is, 13<=18<22.

At a moment of T0+28 $\mu$s, the node R2 receives the seventh packet P7, and an allowable queuing delay of the packet is 18 $\mu$s (the planned residence time+the delay deviation=20-2), so that the packet enters the countdown queue Queue-X because the countdown time [12, 21] of the countdown queue can cover 18 $\mu$s, that is, 12<=18<21.

At a moment of T0+29 $\mu$s, the node R2 receives the eighth packet P8, and an allowable queuing delay of the packet is 18 $\mu$s (the planned residence time+the delay deviation=20-2), so that the packet enters the countdown queue Queue-X because the countdown time [11, 20] of the countdown queue can cover 18 $\mu$s, that is, 11<=18<20.

At a moment of T0+30 $\mu$s, the node R2 receives the ninth packet P9, and an allowable queuing delay of the packet is 18 $\mu$s (the planned residence time+the delay deviation=20-2), so that the packet enters the countdown queue Queue-X because the countdown time [10, 19] of the countdown queue can cover 18 $\mu$s, that is, 10<=18<19.

At a moment of T0+31 $\mu$s, the node R2 receives the tenth packet P10, and an allowable queuing delay of the packet is 18 $\mu$s (the planned residence time+the delay deviation=20-2), so that the packet enters the countdown queue Queue-Y for the following reason: the allowable queuing delay of the packet is exactly equal to the second remaining time CT2-I of the countdown queue Queue-X, i.e., 18, so that the compensation variable V is increased to 1, and the packet enters the adjacent countdown queue Queue-Y with the first remaining time CT1 having a larger value (at this time, the countdown time [CT1, CT2-I] of the countdown queue Queue-Y is [19, 28]), that is, 19<=18+1<28.

As can be seen, the packets P1-P9 enter the countdown queue Queue-X in sequence, and the packet P10 enters the countdown queue Queue-Y with the lower priority, so that the node R2 may still send these packets in sequence.

The processing at a node downstream of the node R2 is also similar to the above processing.

Example 2

As shown in FIG. 10, a plurality of source nodes simultaneously send traffic with the same priority to a network boundary node, one burst sent by src1 includes 10 ordered packets, and the packets are forwarded based on the local deadline mechanism. It is desired that the packet out-of-order caused by a delay adjustment mechanism of local deadlines is not incurred during the forwarding of the packets in the network. There are the following assumptions a) to e).

Assumption a) A planned residence time of each packet in each node is 20 $\mu$s. For simplicity, other types of delays in the node are not considered in the present example, that is, a residence time is merely contributed by a queuing delay. In fact, a similar implementation is feasible in application scenarios where the other types of delays are considered.

Assumption b) A transmission time for each packet to be sent to an egress port is 0.01 $\mu$s. The transmission time is related to a bandwidth of the egress port, and for packets with a same size, the larger the bandwidth of the egress port is, the less the transmission time is.

Assumption c) A propagation delay of the packet on a link is not considered. In fact, a similar implementation is feasible in application scenarios where the propagation delay is considered.

Assumption d) An authorization time of countdown queues maintained on each node is 10 $\mu$s, and a timer interval of 1 $\mu$s is adopted for decrease in countdown information of each queue.

Assumption e) Although a network boundary node R1 receives the 10 packets from src1 within 0.1 $\mu$s, these packets are uniformly interfered by the packets received from the other sources, such that the 10 packets reach an egress port from an ingress port at a rate of one packet per 1 $\mu$s and enter corresponding countdown queues in the node. Therefore, an importance difference between the present example and the previous example is that allowable queuing delays of these packets are different.

Next, a queuing operation of the packets on each node and how to avoid the packet out-of-order with the packet scheduling method of the present disclosure are described below.

Node R1: Assuming that at a moment of T0, countdown queues maintained on the node R1 has the following countdown information:

    Queue-A: [CT1, CT2-I]=[15, 24]
    Queue-B: [CT1, CT2-I]=[25, 34]
    Queue-C: [CT1, CT2-I]=[35, 44]

Each countdown time above may be gradually decreased as the time passes by.

Initially, a compensation variable V is 0.

Although the node R1 receives the packets P1 to P10 from src1 within a very short time from T0 to T0+0.1 $\mu$s, the packets arrive at the egress port at the rate of one packet per 1 $\mu$s and enter the countdown queues as follows:

At the moment of T0, the first packet P1 arrives at the egress port, and an allowable queuing delay of the packet is 20 $\mu$s (see the number in parentheses, and allowable queuing delays of other packets are also shown by the numbers in parentheses), so that the packet enters the countdown queue Queue-A because the countdown time [15, 24] of the countdown queue can cover 20 $\mu$s, that is, 15<=20<24.

At a moment of T0+1 $\mu$s, the second packet P2 arrives at the egress port, and an allowable queuing delay of the packet is 20 $\mu$s, so that the packet enters the countdown queue Queue-A because the countdown time [14, 23] of the countdown queue can cover 20 $\mu$s, that is, 14<=20<23.

At a moment of T0+2 $\mu$s, the third packet P3 arrives at the egress port, and an allowable queuing delay of the packet is 20 $\mu$s, so that the packet enters the countdown queue Queue-A because the countdown time [13, 22] of the countdown queue can cover 20 $\mu$s, that is, 13<=20<22.

At a moment of T0+3 $\mu$s, the fourth packet P4 arrives at the egress port, and an allowable queuing delay of the packet is 20 $\mu$s, so that the packet enters the countdown queue Queue-A because the countdown time [12, 21] of the countdown queue can cover 20 $\mu$s, that is, 12<=20<21.

At a moment of T0+4 $\mu$s, the fifth packet P5 arrives at the egress port, and an allowable queuing delay of the packet is 20 $\mu$s, so that the packet enters the countdown queue Queue-B for the following reason: the allowable queuing delay of the packet is exactly equal to the second remaining time CT2-I of the countdown queue Queue-A, i.e., 20 $\mu$s, so that the compensation variable V is increased to 1, and the packet enters the adjacent countdown queue Queue-B with the first remaining time CT1 having a larger value (at this time, the countdown time [CT1, CT2-I] of the countdown queue Queue-B is [21, 30]), that is, 21<=(20+1)<30.

At a moment of T0+5 $\mu$s, the sixth packet P6 arrives at the egress port, and an allowable queuing delay of the packet is 20 $\mu$s, so that the packet enters the countdown queue Queue-B because the countdown time [20, 29] of the countdown queue can cover 20 $\mu$s, that is, 20<=(20+1)<29.

At a moment of T0+6 $\mu$s, the seventh packet P7 arrives at the egress port, and an allowable queuing delay of the packet is 20 $\mu$s, so that the packet enters the countdown queue Queue-B because the countdown time [19, 28] of the countdown queue can cover 20 $\mu$s, that is, 19<=(20+1)<28.

At a moment of T0+7 $\mu$s, the eighth packet P8 arrives at the egress port, and an allowable queuing delay of the packet is 20 $\mu$s, so that the packet enters the countdown queue Queue-B because the countdown time [18, 27] of the countdown queue can cover 20 $\mu$s, that is, 18<=(20+1)<27.

At a moment of T0+8 $\mu$s, the ninth packet P9 arrives at the egress port, and an allowable queuing delay of the packet is 20 $\mu$s, so that the packet enters the countdown queue Queue-B because the countdown time [17, 26] of the countdown queue can cover 20 $\mu$s, that is, 17<=(20+1)<26.

At a moment of T0+9 $\mu$s, the tenth packet P10 arrives at the egress port, and an allowable queuing delay of the packet is 20 $\mu$s, so that the packet enters the countdown queue Queue-B because the countdown time [16, 25] of the countdown queue can cover 20 $\mu$s, that is, 16<=(20+1)<25.

It is assumed that a gap of 1 $\mu$s between every two adjacent packets is filled with the packets received from the other sources.

Then, the node R1 may send the packet P1 at T0+15 $\mu$s. Considering that the transmission time of the packet P1 is merely 0.01 $\mu$s, an actual residence time of the packet P1 at the node R1 (compared with the receiving moment of T0 of the packet P1) is 15 $\mu$s, and a delay deviation of the packet P1 is 5 $\mu$s according to compar-

ison of the actual residence time with the planned residence time of 20 μs.

The node R1 may send the packet P2 at T0+16 μs. Considering that the transmission time of the packet P2 is merely 0.01 μs, an actual residence time of the packet P2 at the node R1 (compared with the receiving moment of T0 of the packet P2, and it should be noted that the receiving moment is actually T0+0.01 μs and an approximation of the receiving moment is taken, which is also applicable to the other packets) is 16 μs, and a delay deviation of the packet P2 is 4 μs according to comparison of the actual residence time with the planned residence time of 20 μs.

The node R1 may send the packet P3 at T0+17 μs. Considering that the transmission time of the packet P3 is merely 0.01 μs, an actual residence time of the packet P3 at the node R1 (compared with the receiving moment of T0 of the packet P3) is 17 μs, and a delay deviation of the packet P3 is 3 μs according to comparison of the actual residence time with the planned residence time of 20 μs.

The node R1 may send the packet P4 at T0+18 μs. Considering that the transmission time of the packet P4 is merely 0.01 μs, an actual residence time of the packet P4 at the node R1 (compared with the receiving moment of T0 of the packet P4) is 18 μs, and a delay deviation of the packet P4 is 2 μs according to comparison of the actual residence time with the planned residence time of 20 μs.

The node R1 may send the packet P5 at T0+19 μs. Considering that the transmission time of the packet P5 is merely 0.01 μs, an actual residence time of the packet P5 at the node R1 (compared with the receiving moment of T0 of the packet P5) is 19 μs, and a delay deviation of the packet P5 is 1 μs according to comparison of the actual residence time with the planned residence time of 20 μs.

The node R1 may send the packet P6 at T0+25 μs. Considering that the transmission time of the packet P6 is merely 0.01 μs, an actual residence time of the packet P6 at the node R1 (compared with the receiving moment of T0 of the packet P6) is 25 μs, and a delay deviation of the packet P6 is -5 μs according to comparison of the actual residence time with the planned residence time of 20 μs.

The node R1 may send the packet P7 at T0+26 μs. Considering that the transmission time of the packet P7 is merely 0.01 μs, an actual residence time of the packet P7 at the node R1 (compared with the receiving moment of T0 of the packet P7) is 26 μs, and a delay deviation of the packet P7 is -6 μs according to comparison of the actual residence time with the planned residence time of 20 μs.

The node R1 may send the packet P8 at T0+27 μs. Considering that the transmission time of the packet P8 is merely 0.01 μs, an actual residence time of the packet P8 at the node R1 (compared with the receiving moment of T0 of the packet P8) is 27 μs, and a delay

deviation of the packet P8 is -7 μs according to comparison of the actual residence time with the planned residence time of 20 μs.

The node R1 may send the packet P9 at T0+28 μs. Considering that the transmission time of the packet P9 is merely 0.01 μs, an actual residence time of the packet P9 at the node R1 (compared with the receiving moment of T0 of the packet P9) is 28 μs, and a delay deviation of the packet P9 is -8 μs according to comparison of the actual residence time with the planned residence time of 20 μs.

The node R1 may send the packet P10 at T0+29 μs. Considering that the transmission time of the packet P10 is merely 0.01 μs, an actual residence time of the packet P10 at the node R1 (compared with the receiving moment of T0 of the packet P10) is 29 μs, and a delay deviation of the packet P10 is -9 μs according to comparison of the actual residence time with the planned residence time of 20 μs.

As can be seen, an order of transmission of the packets is guaranteed.

Node R2: Assuming that at a moment of T0+15 μs, countdown queues maintained on a node R2 has the following countdown information:

Queue-X: [CT1, CT2-I]=[15, 24]
Queue-Y: [CT1, CT2-I]=[25, 34]
Queue-Z: [CT1, CT2-I]=[35, 44]

Each countdown time above may be gradually decreased as the time passes by.

Initially, a compensation variable V is 0.

At the moment of T0+15 μs, the node R2 receives the first packet P1, and an allowable queuing delay of the packet is 25 μs (the planned residence time+the delay deviation=20+5), so that the packet enters the countdown queue Queue-Y because the countdown time [25, 34] of the countdown queue can cover 25 μs, that is, 25<=25<34.

At a moment of T0+16 μs, the node R2 receives the second packet P2, and an allowable queuing delay of the packet is 24 μs (the planned residence time+the delay deviation=20+4), so that the packet enters the countdown queue Queue-Y because the countdown time [24, 33] of the countdown queue can cover 24 μs, that is, 24<=24<33.

At a moment of T0+17 μs, the node R2 receives the third packet P3, and an allowable queuing delay of the packet is 23 μs (the planned residence time+the delay deviation=20+3), so that the packet enters the countdown queue Queue-Y because the countdown time [23, 32] of the countdown queue can cover 23 μs, that is, 23<=23<32.

At a moment of T0+18 μs, the node R2 receives the fourth packet P4, and an allowable queuing delay of the packet is 22 μs (the planned residence time+the delay deviation=20+2), so that the packet enters the countdown queue Queue-Y because the countdown time [22, 31] of the countdown queue can cover 22 μs, that is, 22<=22<31.

At a moment of T0+19 μs, the node R2 receives the fifth packet P5, and an allowable queuing delay of the packet is 21 μs (the planned residence time+the delay deviation=20+1), so that the packet enters the countdown queue Queue-Y because the countdown time [21, 30] of the countdown queue can cover 18 μs, that is, 21<=21<30.

At a moment of T0+25 μs, the node R2 receives the sixth packet P6, and an allowable queuing delay of the packet is 15 μs (the planned residence time+the delay deviation=20-5), so that the packet enters the countdown queue Queue-Y because the countdown time [15, 24] of the countdown queue can cover 15 μs, that is, 15<=15<24.

At a moment of T0+26 μs, the node R2 receives the seventh packet P7, and an allowable queuing delay of the packet is 14 μs (the planned residence time+the delay deviation=20-6), so that the packet enters the countdown queue Queue-Y because the countdown time [14, 23] of the countdown queue can cover 14 μs, that is, 14<=14<23.

At a moment of T0+27 μs, the node R2 receives the eighth packet P8, and an allowable queuing delay of the packet is 13 μs (the planned residence time+the delay deviation=20-7), so that the packet enters the countdown queue Queue-Y because the countdown time [13, 22] of the countdown queue can cover 13 μs, that is, 13<=13<22.

At a moment of T0+28 μs, the node R2 receives the ninth packet P9, and an allowable queuing delay of the packet is 12 μs (the planned residence time+the delay deviation=20-8), so that the packet enters the countdown queue Queue-Y because the countdown time [12, 21] of the countdown queue can cover 18 μs, that is, 12<=12<21.

At a moment of T0+29 μs, the node R2 receives the tenth packet P10, and an allowable queuing delay of the packet is 11 μs, so that the packet enters the countdown queue Queue-Y because the countdown time [11, 20] of the countdown queue can cover 11 μs, that is, 11<=11<20.

As can be seen, the packets P1-P10 enter the countdown queue Queue-Y in sequence, so that the node R2 may still send these packets in sequence.

The processing at a node downstream of the node R2 is also similar to the above processing.

Example 3

Based on Example 2, the present example further discusses a scenario where the packet out-of-order is prone to occur, that is, a case where a countdown hop moment of a countdown queue is not aligned with a hop moment of an allowable queuing delay of a packet.

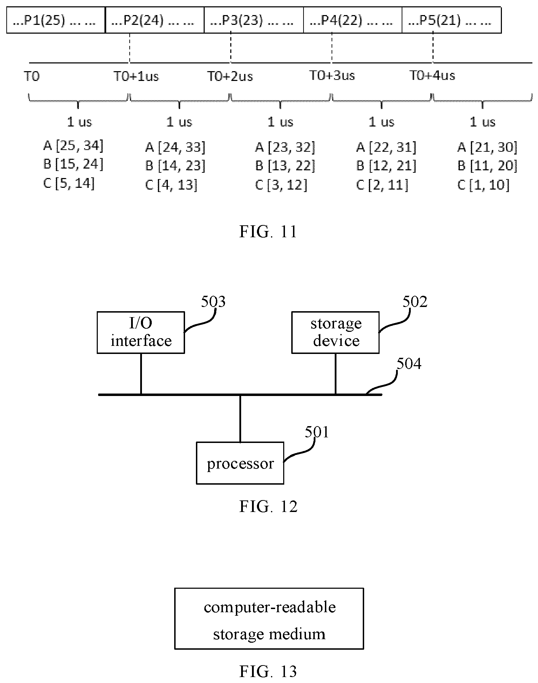

FIG. 11 illustrates countdown hop information of the countdown queues when the node R2 receives the five packets P1-P5 and performs the queuing operation.

As shown in FIG. 11, in a time interval from T0 to T0+1 μs, the countdown information of each countdown queue is as follows:

　　Queue-A: [CT1, CT2-I]=[25, 34]
　　Queue-B: [CT1, CT2-I]=[15, 24]
　　Queue-C: [CT1, CT2-I]=[5, 14]

However, the packets P1 and P2 may be possibly received at the same time during the time interval, and if the packets are inserted into the countdown queues simply according to CT1 <= Q <= CT2 - I, the packet P1 (having an allowable queuing delay Q equal to 25) may enter the countdown queue Queue-A, and packet P2 (having an allowable queuing delay Q equal to 24) may enter the countdown queue Queue-B, that is, the packet out-of-order occurs: the countdown queue Queue-B is more urgent than the countdown queue Queue-A, so that the countdown queue Queue-B may send the packet first, but the packet P2 is supposed to be sent after the packet P1.

Due to the optimization mechanism for avoiding the out-of-order, the following is implemented: the packet P1 (having the allowable queuing delay Q equal to 25) may enter the countdown queue Queue-A because 25<=25<=34; and the packet P2 (having the allowable queuing delay Q equal to 24) may also enter the countdown queue Queue-A for the following reason: 24 is exactly equal to the second remaining time CT2-I of the countdown queue Queue-B, so that the compensation variable V is increased to 1, and the packet is inserted into the countdown queue Queue-A according to the target sum Q+V=25, that is, 25<=25<=34.

It should be noted that such packet out-of-order scenario is caused by different changes of the steps of the upstream and downstream nodes, the received packets P1 and P2 are sent in two adjacent steps from the upstream node but are received in the same step by the current node. Therefore, the packet P1 and the packet P2 may differ from each other by at most one decreasing step I. If a step difference between the packet P1 and the packet P2 exceeds the decreasing step I, which indicates that the packets P1 and P2 are not sent in the adjacent steps from the upstream node, it is impossible to receive the packets P1 and P2 in the same step at the current node, and therefore, the above packet out-of-order problem may not be caused. Even if it is calculated that Q=25 for the packet P1 and Q=23 for the packet P2 at the current node, the above packet out-of-order problem may not be caused because the packets are received in different steps at the current node.

Similarly, the packet P3 (having an allowable queuing delay Q equal to 23) received in a time interval from T0+1 μs to T0+2 μs may be inserted into the countdown queue Queue-A according to the target sum Q+V=24 (it should be noted that a hop of the countdown time of the countdown queue Queue-A occurs at this time), that is, 24<=24<=33.

Similarly, the packets P4 and P5 may also enter the countdown queue Queue-A in sequence.

As can be seen, the node R2 may still send these packets in sequence.

In a second aspect, as shown in FIG. 12, an embodiment of the present disclosure provides an electronic device, including: at least one processor 501; and a storage device 502 having stored thereon at least one computer program which, when executed by the at least one processor 501, causes the at least one processor 501 to implement the packet scheduling method described in the first aspect of the present disclosure.

In some implementations, the electronic device further includes at least one input/output (I/O) interface 503, which is connected between the processor 501 and the storage device 502 and configured to enable information interaction between the processor 501 and the storage device 502.

The processor 501 is a device having data processing capability, and includes, but is not limited to, a Central Processing Unit (CPU); the storage device 502 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write) interface 503 is connected between the processor 501 and the storage device 502, is capable of enabling the information interaction between the processor 501 and the storage device 502, and includes, but is not limited to, a data bus (Bus).

In some implementations, the processor 501, the storage device 502, and the I/O interface 503 are connected to each other through a bus 504, and then are connected to other components of a computing device.

In a third aspect, as shown in FIG. 13, an embodiment of the present disclosure provides a computer-readable storage medium having stored thereon a computer program which, when executed by a processor, implements the packet scheduling method described in the first aspect of the present disclosure.

It should be understood by those of ordinary skill in the art that the functional modules/units in all or some of the operations, systems and devices in the above disclosed method may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The exemplary embodiments of the present disclosure are described above with reference to the drawings, but the scope of the claims of the present disclosure is not limited thereto. Any modification, equivalent replacement and improvement made by those of ordinary skill without departing from the scope and essence of the present disclosure should be considered to fall within the scope of the claims of the present disclosure.

**Claims**

1. A packet scheduling method, comprising:

adding, according to an allowable queuing delay of a packet, the packet to a countdown queue, among a plurality of countdown queues, which has a current queuing time range capable of covering the allowable queuing delay of the packet; and

sending packets in a time order determined by queuing time ranges corresponding to the plurality of countdown queues,

wherein the queuing time range of the countdown queue is [CT1, CT2-I], CT1 denotes a first remaining time of the countdown queue, CT2-I denotes a second remaining time of the countdown queue, CT1 and CT2 satisfy a following relationship:

$$CT2 = CT1 + AT,$$

AT denotes a queue authorization time which is a duration for which the countdown queue is allowed to send packets, the first remaining time and the second remaining time of the countdown queue decrease with time, and I is a decreasing step for a countdown time.

2.  The packet scheduling method of claim 1, wherein adding, according to the allowable queuing delay of the packet, the packet to the countdown queue, among the plurality of countdown queues, which has the current queuing time range capable of covering the allowable queuing delay of the packet comprises:

    determining a compensation variable V corresponding to the packet; and
    in a case where a target sum of the packet is greater than or equal to a first remaining time of one countdown queue among the plurality of countdown queues and is less than a second remaining time of the countdown queue, adding the packet to the countdown queue, wherein the target sum of the packet is a sum of the allowable queuing delay of the packet and the compensation variable V corresponding to the packet.

3.  The packet scheduling method of claim 2, wherein adding, according to the allowable queuing delay of the packet, the packet to the countdown queue, among the plurality of countdown queues, which has the current queuing time range capable of covering the allowable queuing delay of the packet further comprises:
    in a case where the target sum of the packet is the same as a second remaining time of one countdown queue among the plurality of countdown queues, adding the packet to a countdown queue after the countdown queue with the second remaining time the same as the allowable queuing delay of the packet.

4.  The packet scheduling method of claim 3, wherein determining the compensation variable V corresponding to the packet comprises:

    acquiring a current compensation variable V corresponding to the packet;
    adding the allowable queuing delay of the packet and the current compensation variable V corresponding to the packet to obtain a current target sum of the packet;
    in a case where the current target sum of the packet is different from a second remaining time of any of the plurality of countdown queues, determining the current compensation variable V as the compensation variable V corresponding to the packet; and
in a case where the current target sum of the packet is the same as a second remaining time of one countdown queue among the plurality of countdown queues, increasing the current compensation variable V by the decreasing step I to obtain an updated compensation variable V, and determining the updated compensation variable V as the compensation variable V corresponding to the packet.

5.  The packet scheduling method of claim 1, further comprising:
    calculating the allowable queuing delay of the packet according to a planned residence time and a delay deviation carried in the packet.

6.  The packet scheduling method of claim 2, wherein a creation granularity of the compensation variable V comprises at least one of the following granularities:

    taking a data flow as the granularity, with a compensation variable V created for a data flow to which the packet belongs and taken as the compensation variable V corresponding to the packet;
    taking an ingress port as the granularity, with a compensation variable V created for an ingress port which receives the packet and taken as the compensation variable V corresponding to the packet;
    taking a combination of the ingress port and the data flow as the granularity, with a compensation variable V created for the data flow to which the packet belongs under the ingress port which receives the packet and taken as the compensation variable V corresponding to the packet;
    taking a planned residence time as the granularity, with a compensation variable V created for a data flow having a planned residence time the same as a planned residence time of the packet and taken as the compensation variable V corresponding to the packet; or
    taking a combination of the ingress port, the planned residence time, and the data flow as the granularity, with a compensation variable V created for the data flow having the planned residence time the same as the planned residence time of the packet under the ingress port which receives the packet and taken as the compensation variable V corresponding to the packet.

7.  The packet scheduling method of claim 2, further comprising:
    in a case where the compensation variable V corresponding to the packet does not exist, creating the compensation variable V corresponding to the packet, and setting an initial value for the compensation variable V.

8. The packet scheduling method of claim 7, further comprising:

checking a difference between an arrival moment of the packet and a latest update moment of the compensation variable V corresponding to the packet; and
in a case where the difference exceeds a first threshold, resetting the compensation variable V corresponding to the packet to the initial value, and modifying the latest update moment of the compensation variable V corresponding to the packet to a current system time.

9. The packet scheduling method of claim 7, further comprising:

regularly performing a recycling process of the compensation variable V; and
the recycling process comprises:

checking a difference between a current system time and a latest update moment of the compensation variable V; and
in a case where the difference exceeds a second threshold, deleting the compensation variable V.

10. The packet scheduling method of claim 1, wherein a first remaining time of each countdown queue is inversely proportional to scheduling priority of the countdown queue, and sending the packets in the time order determined by the queuing time ranges corresponding to the plurality of countdown queues comprises:

determining a countdown queue with the highest scheduling priority among the plurality of countdown queues according to the first remaining time of each countdown queue; and
sending the packets in the countdown queue with the highest scheduling priority.

11. The packet scheduling method of claim 10, wherein sending the packets in the countdown queue with the highest scheduling priority comprises:

in a case where the first remaining time of the countdown queue decreases to 0, sending the packets in the countdown queue; and
in a case where the first remaining time of none of the plurality of countdown queues is 0, sending the packets in a countdown queue having the minimum first remaining time and qualifying for transmission.

12. The packet scheduling method of any one of claims 1 to 11, further comprising:
in a case where the first remaining time of the countdown queue decreases to 0 and a time slice having a time length equal to the queue authorization time AT passes by, resetting the first remaining time and the second remaining time of the countdown queue, with the first remaining time of the countdown queue reset to a preset initial maximum value, and the second remaining time of the countdown queue reset to a value obtained by subtracting the decreasing step I from a sum of the preset initial maximum value and the queue authorization time AT.

13. The packet scheduling method of any one of claims 1 to 11, wherein the queuing time ranges of the countdown queues are adjacent to each other and do not overlap.

14. An electronic device, comprising:

at least one processor; and
a storage device having stored thereon at least one computer program which, when executed by the at least one processor, causes the at least one processor to implement the packet scheduling method of any one of claims 1 to 13.

15. A computer-readable storage medium storing a computer program which, when executed by a processor, implements the packet scheduling method of any one of claims 1 to 13.

S100

add, according to an allowable queuing delay of a packet, the packet to a countdown queue, among a plurality of countdown queues, which has a current queuing time range capable of covering the allowable queuing delay of the packet

S200

send packets in a time order determined by queuing time ranges corresponding to the plurality of countdown queues

FIG. 1

S110

determine a compensation variable V corresponding to the packet

S120

in a case where a target sum of the packet is greater than or equal to a first remaining time of one countdown queue among the plurality of countdown queues and is less than a second remaining time of the countdown queue, add the packet to the countdown queue, where the target sum of the packet is the sum of the allowable queuing delay of the packet and the compensation variable V corresponding to the packet

FIG. 2

S111

acquire a current compensation variable V corresponding to the packet

S112

add the allowable queuing delay of the packet and the current compensation variable V corresponding to the packet to obtain a current target sum of the packet

S113

in a case where the current target sum of the packet is different from a second remaining time of any of the plurality of countdown queues, determine the current compensation variable V as the compensation variable V corresponding to the packet

S114

in a case where the current target sum of the packet is the same as a second remaining time of one countdown queue among the plurality of countdown queues, increase the current compensation variable V by the decreasing step I to obtain an updated compensation variable V, and determine the updated compensation variable V as the compensation variable V corresponding to the packet

FIG. 3

check a difference between an arrival moment of the packet and a latest update moment of the compensation variable V corresponding to the packet — S131

in a case where the difference exceeds a first threshold, reset the compensation variable V corresponding to the packet to the initial value, and modify the latest update moment of the compensation variable V corresponding to the packet to a current system time — S132

FIG. 4

check a difference between the current system time and the latest update moment of the compensation variable V — S141

in a case where the difference exceeds a second threshold, delete the compensation variable V — S142

FIG. 5

determine a countdown queue with the highest scheduling priority among the plurality of countdown queues according to the first remaining time of each countdown queue — S210

send the packets in the countdown queue with the highest scheduling priority — S220

FIG. 6

in a case where the first remaining time of the countdown queue decreases to 0, send the packets in the countdown queue — S221

in a case where the first remaining time of none of the plurality of countdown queues is 0, send the packets in a countdown queue having the minimum first remaining time and qualifying for transmission — S222

FIG. 7

Deadline queue group

queue-1 [60, 69]

queue-2 [50, 59]

queue-3 [40, 49]

··· ···

queue-6 [10, 19]

queue-7 [0, 9]

non-Deadline queue group

queue-8

queue-9

··· ···

Deadline queue group

queue-1 [59, 68]

queue-2 [49, 58]

queue-3 [39, 48]

··· ···

queue-6 [9, 18]

queue-7 [-1, 8]

non-Deadline queue group

queue-8

queue-9

··· ···

moment of T0          moment of T0+1 μs          moment of T0+2 μs

FIG. 8

T0+10us          T0          T0+31us     T0+26us          T0+19us     T0+16us

P10(+20), ..., P1(+20)          P10(+18), ..., P5(+18)          P4(+24), ..., P1(+24)

src          R1          R2          D

FIG. 9

T0+0.1us          T0          +29us          +25us          +19us          +15us

src1

src2          P10(+20), ..., P1(+20)

... ...          P10,..P9,..P8,..P7,..P6          P5,...P4,..P3,..P2,...P1
                 (11) (12) (13) (14) (15)          (21) (22) (23) (24) (25)

srcn          R1          R2          D

FIG. 10

20

| ...P1(25) ... ... | ...P2(24) ... ... | ...P3(23) ... ... | ...P4(22) ... ... | ...P5(21) ... ... |
|---|---|---|---|---|

T0          T0+1us          T0+2us          T0+3us          T0+4us

1 us          1 us          1 us          1 us          1 us

A [25, 34]    A [24, 33]    A [23, 32]    A [22, 31]    A [21, 30]
B [15, 24]    B [14, 23]    B [13, 22]    B [12, 21]    B [11, 20]
C [5, 14]     C [4, 13]     C [3, 12]     C [2, 11]     C [1, 10]

FIG. 11

```
                 503                           502
  +-------------+                  +-------------+
  |    I/O      |                  |   storage   |
  |  interface  |                  |   device    |
  +-------------+                  +-------------+
        |                                |   504
        |                                |
  ------+--------------------------------+------
                        |
                        |   501
                +-------------+
                |  processor  |
                +-------------+
```

FIG. 12

+---------------------------+
|   computer-readable       |
|   storage medium          |
+---------------------------+

FIG. 13

## INTERNATIONAL SEARCH REPORT

| International application No. |
| --- |
| **PCT/CN2023/119005** |

### A. CLASSIFICATION OF SUBJECT MATTER

H04L 47/50(2022.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC: 报文, 倒计时, 队列, 多个, 剩余, 剩余时间, 时延, 延时, 迟延, 延迟, 优先级, deadline, delay, packet, queue?, timer, priority

### C. DOCUMENTS CONSIDERED TO BE RELEVANT

| Category* | Citation of document, with indication, where appropriate, of the relevant passages | Relevant to claim No. |
| --- | --- | --- |
| Y | CN 114095453 A (HUAWEI TECHNOLOGIES CO., LTD.) 25 February 2022 (2022-02-25) description, paragraphs 39-222 | 1-15 |
| Y | US 2019044857 A1 (INTEL CORP.) 07 February 2019 (2019-02-07) description, columns 2-11 | 1-15 |
| A | CN 108540402 A (HUAWEI TECHNOLOGIES CO., LTD.) 14 September 2018 (2018-09-14) entire document | 1-15 |
| A | CN 108628668 A (BEIJING JINGDONG SHANGKE INFORMATION TECHNOLOGY CO., LTD. et al.) 09 October 2018 (2018-10-09) entire document | 1-15 |
| A | US 10277518 B1 (INNOVIUM, INC.) 30 April 2019 (2019-04-30) entire document | 1-15 |
| A | US 2018115493 A1 (ALCATEL LUCENT) 26 April 2018 (2018-04-26) entire document | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 November 2023** | **13 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119005**

| Patent document cited in search report | | | Publication date (day/month/year) | Patent family member(s) | | | Publication date (day/month/year) |
|---|---|---|---|---|---|---|---|
| CN | 114095453 | A | 25 February 2022 | WO | 2022022224 | A1 | 03 February 2022 |
| | | | | EP | 4181480 | A1 | 17 May 2023 |
| | | | | US | 2023179534 | A1 | 08 June 2023 |
| US | 2019044857 | A1 | 07 February 2019 | US | 10715437 | B2 | 14 July 2020 |
| CN | 108540402 | A | 14 September 2018 | | None | | |
| CN | 108628668 | A | 09 October 2018 | | None | | |
| US | 10277518 | B1 | 30 April 2019 | US | 10673770 | B1 | 02 June 2020 |
| US | 2018115493 | A1 | 26 April 2018 | WO | 2016150833 | A1 | 29 September 2016 |
| | | | | EP | 3073680 | A1 | 28 September 2016 |
| | | | | CN | 107431668 | A | 01 December 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211136390